# EUROPEAN PATENT APPLICATION

(11) **EP 2 444 730 A1**
(43) Date of publication of application: **25.04.2012**
(21) Application number: 10382272.2
(22) Date of filing: 19.10.2010
(51) Int. Cl.: F23N 1/00, F16K 1/36, F16K 27/02, F16K 31/06

(54) **Method for assembling an electromagnetic gas valve, and electromagnetic gas valve**

(71) Applicant: Coprecitec, S.L., 20550 Aretxabaleta (Gipuzkoa) (ES)
(72) Inventor: Querejeta Andueza, Félix, 01010 Vitoria-Gasteiz (ES); Echenausía Saez de Zaitegui, Francisco Javier, 20550 Aretxabaleta (ES); Múgica Odriozola, José Ignacio, 20570 Bergara (ES)
(74) Representative: Igartua, Ismael

(57) **Abstract**

Method for assembling an electromagnetic gas valve, and valve assembled with said method. In the method regulation means (2) are disposed in a first body (100) of the valve (500), which comprises a gas enclosure (1) with an inlet (10), an outlet (11), and a through hole (12) that communicates the outlet (11) with the inlet (10), electromagnetic means (3) are disposed in a second body (200) of the valve (500), and said bodies (100, 200) are joined to each other, insulating means (5) being positioned between both bodies (100, 200). In addition, a unit (300) is formed joining the insulating means (5) and the regulation means (2), and, once the bodies (100, 200) have been joined, the unit (300) is associated to the electromagnetic means (3) by the blowing of a fluid into the first body (100) through the outlet (11) and/or the inlet (10).

## Description

### TECHNICAL FIELD

This invention relates to methods for assembling electromagnetic gas valves, and to electromagnetic gas valves.

### PRIOR ART

Gas valves are generally used to control or regulate the flow of gas that reaches a burner (or other device of this type), thereby regulating the flame that is generated in said burner. Said valves comprise a gas inlet through which they receive the gas coming from a gas source, for example, a gas outlet through which the regulated flow of gas exits to the burner, a through hole that communicates the inlet with the outlet, and a valve seating that cooperates with the through hole to regulate the flow of gas, thereby regulating the outlet flow of gas towards said burner.

Electromagnetic gas valves also comprise electromagnetic means that act upon the valve seating so that said valve seating cooperates with the through hole when required. For example, document US5215115A discloses an electromagnetic gas valve of this type, which comprises a first body that comprises a gas enclosure with the inlet, the outlet and the through hole that communicates the outlet with the inlet, a second body that comprises an air enclosure where the actuator means are disposed, and insulating means disposed between both bodies, which close the first body (the gas enclosure) in a sealed manner in relation to the second body (the air enclosure).

### BRIEF DISCLOSURE OF THE INVENTION

It is an object of the invention to provide a method for assembling an electromagnetic valve, as described in the claims.

In the method for assembling an electromagnetic valve of the invention, regulation means are disposed in a first body of the valve, which comprises a gas enclosure with a gas inlet, a gas outlet, and a through hole that communicates the outlet the the inlet, electromagnetic means are disposed inside a second body of the valve, an insulating means is disposed on the first body or on the second body of said valve, and the first body and the second body are joined to each other, the insulating means being positioned between both bodies. The electromagnetic means act on the regulation means so that said regulation means regulate the passage of gas between the inlet and the outlet through the through hole.

In the method of the invention a unit is also formed by connecting the insulating means and the regulation means to each other, and, once the bodies have been connected together, the unit is associated to the electromagnetic means by the blowing of a fluid under pressure, preferably air, into the gas enclosure of the first body through the outlet and/or the inlet, said fluid pushing the unit towards the second body, said unit being associated to the electromagnetic means.

The unit is thus associated in a comfortable manner to the electromagnetic means, with the result that said electromagnetic means can act upon the regulation means, said electromagnetic means thereby being able to regulate the gas.

It is another object of the invention to provide an electromagnetic valve that is assembled according to said method, as described in the claims.

The electromagnetic gas valve of the invention comprises a first body that comprises a gas enclosure with a gas inlet, a gas outlet, and a through hole through which the outlet is communicated with the inlet, regulation means adapted for regulating the passage of gas through the through hole, electromagnetic means that act upon the regulation means to regulate said passage of gas, a second body that delimits an air enclosure where the electromagnetic means are disposed, and which is joined to the first body, and insulating means to keep the gas enclosure of the first body closed in a sealed manner in relation to the air enclosure of the second body when said bodies are joined. The regulation means and the insulating means are connected to form a unit, said unit being connected to the electromagnetic means.

As a result, as the unit is associated to the electromagnetic means, said electromagnetic means act upon the regulation means with said association, the passage of gas through the valve being open or not in accordance with said electromagnetic means.

These and other advantages and characteristics of the invention will be made evident in the light of the drawings and the detailed description thereof.

### DESCRIPTION OF THE DRAWINGS

Figure 1 shows a cross-sectional view of a preferred embodiment of the electromagnetic gas valve of the invention, showing an inlet and an outlet of said valve.
Figure 2 shows a cross-sectional view of a first body of the valve of Figure 1.
Figure 3 shows a cross-sectional view of a second body of the valve of Figure 1, with electromagnetic means housed in said second body.
Figure 4 shows a cross-sectional view of the valve of Figure 1, with an open through hole.
Figure 5 shows a cross-sectional view of the valve of Figure 1, with the through hole closed.
Figure 6 is a view in perspective of a unit of the valve of Figure 1.

### DETAILED DISCLOSURE OF THE INVENTION

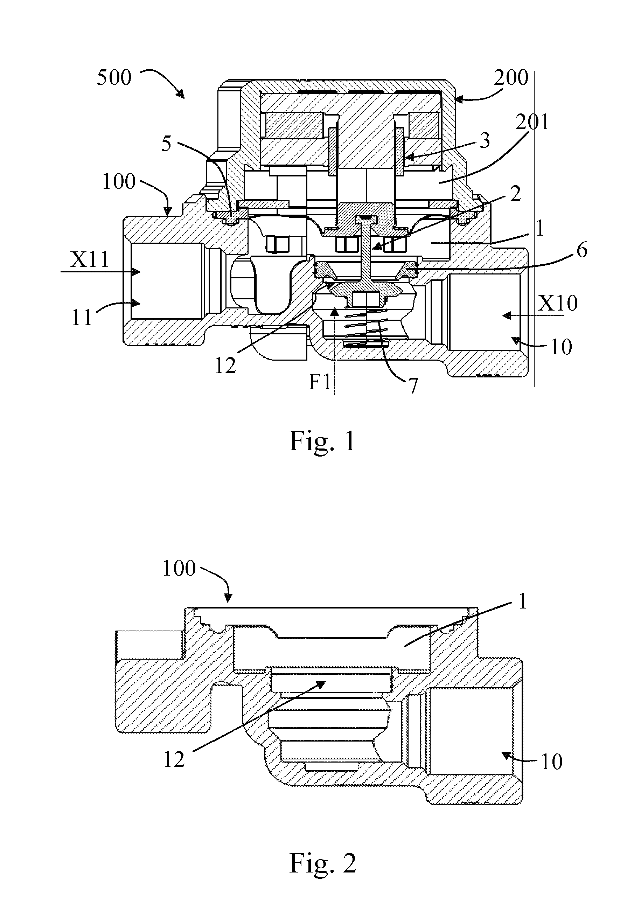

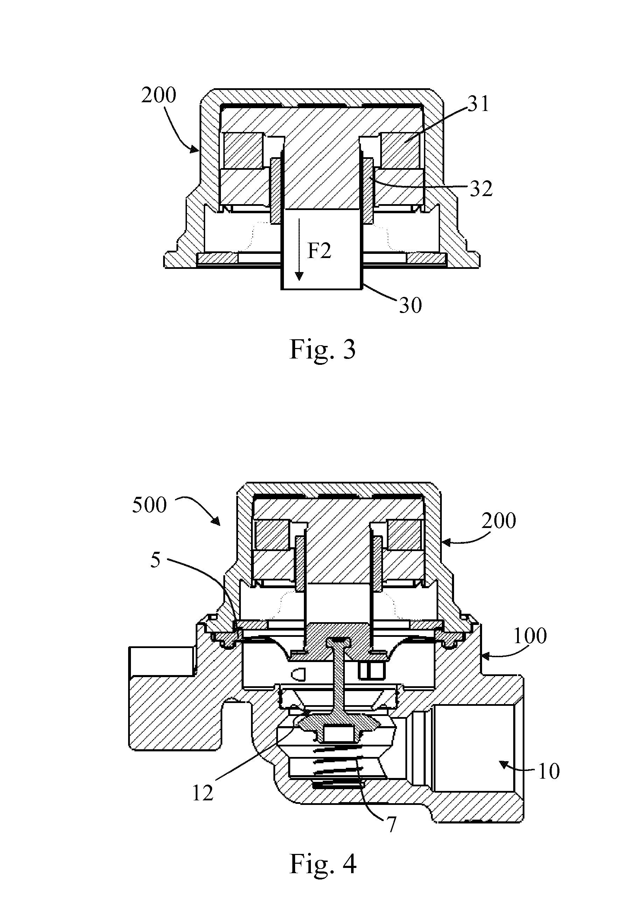

Figures 1, 4 and 5 show a possible embodiment of an electromagnetic gas valve 500 of the invention. In said possible embodiment, the valve 500 comprises a first body 100, shown by way of example in Figure 2, which comprises a gas enclosure 1 with a gas inlet 10, a gas outlet 11, and a through hole 12 through which the outlet 11 is communicated with the inlet 10, regulation means 2 that comprise a valve seating and which are adapted for regulating the passage of gas through the through hole 12, electromagnetic means 3 that act upon the regulation means 2 to regulate said passage of gas, a second body 200, shown by way of example in Figure 3, that delimits an air enclosure 201 where the electromagnetic means 3 are disposed, and which is joined to the first body 100, and insulating means 5 to keep the gas enclosure 1 of the first body 100 closed in a sealed manner in relation to the air enclosure 201 of the second body 200 when said bodies 100 and 200 are joined, said insulating means 5 preferably comprising a membrane made of elastic material.

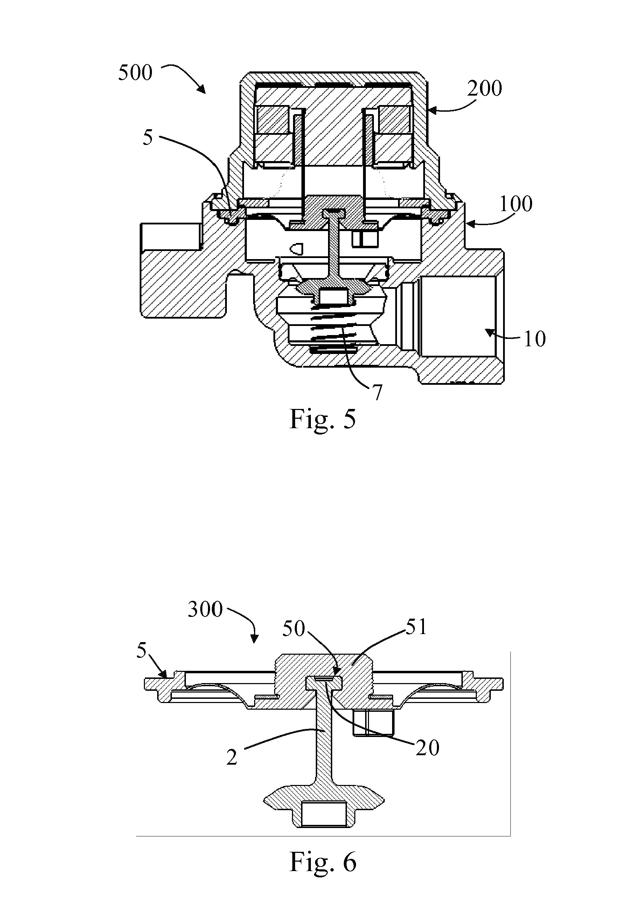

Preferably, in the possible embodiment of Figures 1, 4 and 5, the electromagnetic means 3 comprise a static permanent magnet 31, a moving part 30 and a coil 32 wound in the moving part 30, as shown in the example of Figure 3. When the coil 32 is supplied a magnetic field is generated between said coil 32 and the permanent magnet 31 which gives rise to a regulation force F2 that causes the moving part 30 to move when said regulation force F2 exceeds an opposite maintenance force F1 exerted by closure means 4 of the valve 500, the movement of said moving part 30 causing a movement of the regulation means 2, thereby opening the passage of gas through the through hole 12, as shown by way of example in Figure 4. The closure means 7 comprise a spring and in the absence of supply to the coil 32 cause the regulation means 2 to close the through hole 12 completely, as shown by way of example in Figure 5. Depending on the value of the supply current applied to the coil 32 the movement of the moving part 30 and therefore the regulation means 2 can be regulated, the flow of gas through the through hole 12 and therefore through the outlet 11 of the valve 500 being capable of being regulated. Preferably, in a possible embodiment, the spring of the closure means 7 is housed in the gas enclosure 1 of the first body 100 of the valve 500, joined at one end to said first body 100 and at the other end to the regulation means 2.

In the embodiment shown in the Figures, the regulation means 2 and the insulating means 5 are joined to form a unit 300, as shown by way of example in Figure 6. In said embodiment, said insulating means 5 comprise a connection housing 50 where an area of connection 20 of the regulation means 2 is coupled to form the unit 300, and said unit 300 is associated to the electromagnetic means 3, so that said unit 300 moves in conjunction with the moving part 30 of said electromagnetic means 3. Said moving part 30 is substantially hollow, the unit 300 comprising a projection 51 housed at least partially and without freedom of movement, locked, inside said moving part 30, said unit 300 thereby moving in conjunction with said moving part 30. The projection 51 is comprised in the elastic means 5.

The valve 500 of the invention is assembled according to the method of the invention, which is explained below. In an embodiment of said method the regulation means 2 are disposed in the first body 100 of said valve 500, the electromagnetic means 3 are disposed inside second body 200 of the valve 500, the insulating means 5 are disposed on said first body 100 or on said second body 200, and the first body 100 and the second body 200 are joined to each other, the insulating means 5 being positioned between both bodies 100 and 200. In said embodiment the electromagnetic means 3 are disposed in the second body 200 after having been tested on their own, thus ensuring, in a simple manner, that they operate correctly before the valve 500 is assembled. Once said bodies 100 and 200 are joined to each other, the unit 300 is associated to the electromagnetic means 3 by the blowing of a fluid under pressure, preferably air, into the gas enclosure 1 of the first body 100 through the outlet 11 in the direction X11 and/or the inlet 10 in the direction X10, as shown by way of example in Figure 1, said fluid pushing said unit 300 towards the inside of the second body 200, the insulating means 5 being housed at least partially in the moving part 30 of the electromagnetic means 3. As a result, the unit 300 is associated to the electromagnetic means 3, said electromagnetic means 3 being capable of acting correctly on the regulation means 2 that form part of said unit 300, thus making it possible to regulate the gas in said valve 500. In a preferred embodiment the fluid enters the gas enclosure 1 through the outlet 11 and the inlet 10 at the same time.

The valve 500 may also comprise an elastic member 6 disposed in a fixed manner on the first body 100 of said valve 500, with a central hole that that acts as a through hole 12. The regulation means 2 thus cooperate with said elastic member 6 to regulate said through hole 12. As the fluid under pressure pushes the unit 300, the insulating means 5 are pushed on the one hand, with the projection being housed in the moving part 30, and the regulation means 2 on the other, which close the through hole 12, thereby ensuring that unless the electromagnetic means 3 act, said through hole 12 is closed and prevents gas from escaping from the valve 500. Said insulating member 6 is disposed on the first body 100 before the regulation means 2 are housed in said first body 100.

The unit 300 is formed before the insulating means 5 are disposed on the first body 100 or on the second body 200, and in a first embodiment of the method of the invention, said unit 300 is disposed on the first body 100 when the insulating means 5 are disposed on said first body 100 or on said second body 200 of said valve 500, so that the regulation means 2 are housed in said first body 100. The second body 200 is then disposed on the unit 300 that has already been disposed on the first body 100, said second body 200 being fixed to said first body 100 (by means of screws or equivalent means, for example). In the first embodiment, before the second body 200 is disposed on the unit 300 the electromagnetic means 3 are housed in the air enclosure 201 of said second body 200.

The fluid is blown for a preset period of time that is long enough to dispose the projection 51 and the regulation means 2 in their place, and after said fluid is no longer blown it is drained through the outlet 11 through which it has been blown.

In a second embodiment of the method of the invention, the unit 300 is disposed on the second body 200 of the valve 500 so that the regulation means 2 are outside said second body 200. The first body 100 is disposed on the unit 300 once said unit 300 has been disposed on said second body 200, said first body 100 being fixed to said second body 200 (by means of screws or equivalent means, for example). In the second embodiment, before the unit 300 is disposed on the second body 200 the electromagnetic means 3 are housed in the air enclosure 201 of said second body 200.

## Claims

1. Method for assembling an electromagnetic gas valve, in which
regulation means (2) are disposed in a first body (100) of the valve (500), which comprises a gas enclosure (1) with a gas inlet (10), a gas outlet (11), and a through hole (12) that communicates the outlet (11) with the inlet (10),
electromagnetic means (3) are disposed inside a second body (200) of the valve (500), which act upon the regulation means (2) to regulate the passage of gas between the inlet (10) and the outlet (11) through the through hole (12),
an insulating means (5) is disposed on the first body (100) or on the second body (200) of said valve (500), and
the first body (100) and the second body (200) are joined to each other, the insulating means (5) being positioned between both bodies (100, 200),
**characterised in that**
a unit (300) is formed by joining the insulating means (5) and the regulation means (2) to each other, and,
once the two bodies (100, 200) are joined to each other, the unit (300) is associated to the electromagnetic means (3) by the blowing of a fluid under pressure into the gas enclosure (1) of the first body (100) through the outlet (11) and/or the inlet (10), which pushes said unit (300) towards the inside of the second body (200).

2. Method according to claim 1, wherein the unit (300) is formed before the insulating means (5) is disposed on the first body (100) or on the second body (200), said unit (300) being disposed on the first body (100) when the insulating means (5) is disposed on said first body (100) or on said second body (200) of said valve (500), so that the regulation means (2) are housed in said first body (100), the second body (200) being disposed on the unit (300) once said unit (300) has been disposed on said first body (100), said second body (200) being fixed to said first body (100).

3. Method according to claim 2, wherein before the second body (200) is disposed on the unit (300), the electromagnetic means (3) are housed in an air enclosure (201) of said second body (200).

4. Method according to claim 1, wherein the unit (300) is formed before the insulating means (5) is disposed on the first body (100) or on the second body (200), said unit (300) being disposed on the second body (200) when the insulating means (5) is disposed on said first body (100) or on said second body (200) of said valve (500), so that the regulation means (2) are positioned outside said second body (200), the first body (100) being disposed on the unit (300) once said unit (300) has been disposed on said second body (200), said first body (100) being fixed to said second body (200).

5. Method according to claim 4, wherein before the unit (300) is disposed on the second body (200), the electromagnetic means (3) are housed in an air enclosure (201) of said second body (200).

6. Method according to any of the preceding claims, wherein to form the unit (300) the insulating means (5) and the regulation means (2) are joined to each other, an area of connection (20) of said regulation means (2) being coupled in a connection housing (50) of said insulating means (5).

7. Electromagnetic gas valve that is assembled according to the method of any of the preceding claims, comprising
a first body (100) that comprises a gas enclosure (1) with a gas inlet (10), a gas outlet (11), and a through hole (12) through which the outlet (11) is communicated with the inlet (10),
regulation means (2) adapted for regulating the passage of gas through the through hole (12),
electromagnetic means (3) that act upon the regulation means (2) to regulate said passage of gas,
a second body (200) that delimits an air enclosure (201) where the electromagnetic means (3) are disposed, and which is joined to the first body (200), and
insulating means (5) to keep the gas enclosure (1) of the first body (100) closed in a sealed manner in relation to the air enclosure (201) of the second body (200) when said bodies (100, 200) are joined,
**characterised in that**
the regulation means (2) and the insulating means (5) are joined to form a unit (300), said unit (300) being associated to the electromagnetic means (3).

8. Electromagnetic gas valve according to claim 7, wherein the electromagnetic means (3) comprise a moving part (30) that moves to regulate the through hole (12), the unit (300) moving in conjunction with said moving part (30).

9. Electromagnetic gas valve according to claim 8, wherein the moving part (30) is substantially hollow, the unit (300) comprising a projection (51) housed at least partially and without freedom of movement inside said moving part (30).

10. Electromagnetic gas valve according to claim 9, wherein the projection (51) is comprised in the elastic means (5).

11. Electromagnetic gas valve according to any of claims 7 to 10, wherein the insulating means (5) comprise a connection housing (50) where an area of connection (20) of the regulation means (2) is coupled to form the unit (300).

12. Electromagnetic gas valve according to any of claims 7 to 11, wherein the insulating means (5) comprise a membrane.
